# EUROPEAN PATENT SPECIFICATION

(11) **EP 4 480 448 B1**
(45) Date of publication and mention of the grant of the patent: **11.03.2026**
(21) Application number: 23180799.1
(22) Date of filing: 22.06.2023
(51) Int. Cl.: A61C 19/06

(54) **DENTAL TRAY**
ZAHNSCHALE
PLATEAU DENTAIRE

(43) Date of publication of application: 25.12.2024
(73) Proprietor: Group Becomfident Europe AB, 269 36 Båstad (SE)
(72) Inventor: LING-VANNERUS, Johan, 269 40 BÅSTAD (SE)
(74) Representative: Ström & Gulliksson AB

(56) References cited:
- WO-A1-2016/151570
- US-A1- 2004 038 183
- US-A1- 2010 178 630

## Description

### FIELD OF THE INVENTION

The present invention refers to a dental tray for bleaching teeth. More specifically, the present invention refers to a dental tray for bleaching teeth, wherein the dental tray is U-shaped for conforming with a dental arch of a mammal.

### BACKGROUND ART

In society, there is a desire for whiter teeth. To achieve this goal, people have veneers placed over their teeth or have their teeth chemically bleached. A common method for bleaching involves the use of a dental tray that is custom-fitted to a person's teeth and comfortable to wear. One type of customized tray is made from a stone cast of a person's teeth. Other non-customized (generic) trays that approximate the shapes and sizes of a variety of users' dental arches have also been used. A dental bleaching composition is placed into the tray and the tray placed over the person's teeth for a certain time period. Examples of prior art solutions are described in US2010/178630A1, WO2016/151570A1, and in US2004/038183A1.

These generic trays do not fit the specific tooth morphology of the individual patients and potentially exposes parts of the patients' soft tissue to the bleaching agent such as hydrogen peroxide. The exposure of the chemical to the soft tissue may cause irritation or even burns to the gum.

The generic trays are typically made up of plastic material and in the form of accurate U-shaped mouthpiece with an open-ended interior recess adapted to loosely fit over either of the upper or the lower teeth. As a consequence, the tray has a tendency to wobble and slide about in the patient's mouth, thus causing a loss of the bleaching agent, the contamination of the bleaching agent with saliva with which it intermixes in the tray, and a very loose contact of the bleaching agent with the surfaces of the teeth. Such inaccurate sized trays typically provide inaccurate results and limited hygiene. Hence the efficacy of the treatment is somewhat diminished.

In the view of the foregoing, there is need for an improved dental tray that accurately and securely fits around user's teeth and restricts contact between the bleaching agent and oral soft tissue.

### SUMMARY OF THE INVENTION

Accordingly, the present invention preferably seeks to mitigate, alleviate or eliminate one or more of the above-identified deficiencies in the art and disadvantages singly or in any combination and solves at least the above mentioned problems by a dental tray for bleaching teeth, wherein said dental tray has an arched longitudinal extension for conforming with a dental arch of a mammal, wherein a trough extends from a first transversal wall at a first end of the longitudinal extension to a second transversal wall at a second end of the longitudinal extension, said dental tray being plastically deformable, such that the trough may elastically enclose the teeth. An upper end of the first end wall and/or the second end wall is concavely arched to improve the fit with the gum distally of the innermost molars.

Further advantages will be apparent from the detailed description as well as the appended dependent claims.

### BRIEF DESCRIPTION OF THE DRAWINGS

These and other aspects, features and advantages of which the invention is capable, will be apparent and elucidated from the following description of embodiments of the present invention, reference being made to the accompanying drawings, in which
Fig. 1 shows an isometric view of a dental tray according to one embodiment of the present invention;
Fig. 2 shows a cross-sectional view of the dental tray of Fig. 1; and
Fig. 3 show a side view of the dental tray of Fig. 1.

### DETAILED DESCRIPTION OF THE EMBODIMENTS

Embodiments of the present invention will be described in more detail below with reference to the accompanying drawings in order for those skilled in the art to be able to carry out the invention. The invention may, however, be embodied in many different forms and should not be construed as limited to the embodiments set forth herein. Rather, these embodiments are provided so that this disclosure will be thorough and complete, and will fully convey the scope of the invention to those skilled in the art. The embodiments do not limit the invention, but the invention is only limited by the appended patent claims. Furthermore, the terminology used in the detailed description of the particular embodiments illustrated in the accompanying drawings is not intended to be limiting of the invention.

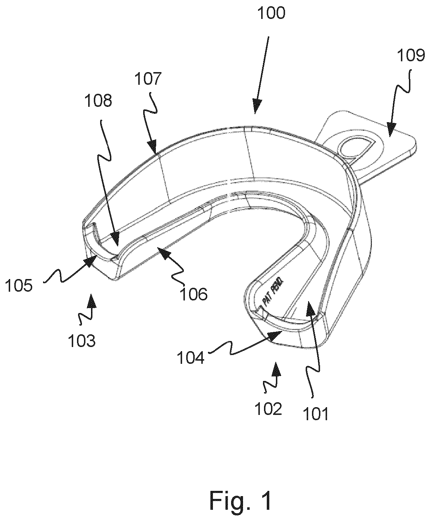

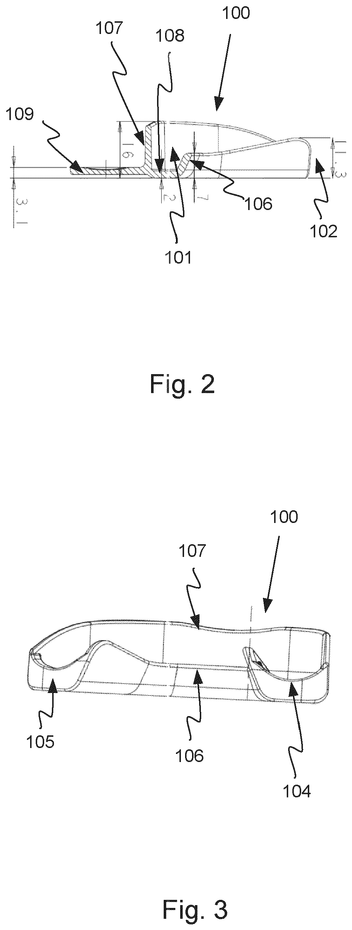

In Fig. 1 an isometric view of a dental tray 100 is disclosed. The dental tray 100 is arch shaped to conform with a dental arch of a mammal. The arch shape of the dental tray 100 may also be described as U-shaped or horseshoe shaped. The dental tray 100 comprises a through 101, as further disclosed in Fig. 2. The through 101 extends from a first longitudinal end 102 to a second longitudinal end 103. At the first longitudinal end 102 there is provided a first transversal end wall 104. At the second longitudinal end 103 there is provided a second transversal end wall 105. The end walls 104, 105 ensures that the dental arch of the mammal is fully enclosed by the dental tray 101. As such, the end walls 104, 105 are configured to be placed distally of the innermost molars, on the right and left side, respectively. From the first end wall 104 the through 101 then extends within a lingual side wall 106 and a buccal/labial side wall 107. The lingual side wall 106 and the buccal/labial side wall 107 then ends at the second end wall 105, configured to be placed distally of the other inner most molar. The bottom of the through 101 is defined by a occlusal base wall 108, configured to be arranged along the occlusal surfaces of the teeth of the dental arch. When the dental tray 100 is configured in this way, with a through defined by end walls 104, 105, side walls 106, 107, and base wall 108, the through will be able to decrease leakage of bleaching agents from the dental tray 100, such that soft tissue irritation may be decreased.

The end walls 104, 105 extend from the occlusal base wall 108. An upper end of the end wall 104 and the end wall 105 may be arched, such as concavely arched, to improve fit with the gum distally of the inner most molars, as disclosed in Fig. 3. The end walls 104, 105 may be deformable, such as elastic. When the end walls 104, 105 are deformable, they may also be concavely shaped without giving rise to gum irritation distally of the inner most molars, since the concave shape then can fit snuggly with the gum.

The dental tray 100 is plastically deformable after heating in for example water. The concept of plastically deforming a product for covering teeth is known as "boil and bite" and is used in the field of mouthguards in martial arts etc. The dental tray 100 is a "boil and bite" tray. In practice, this means that the dental tray 100 is prone to undergo plastic deformation after heating the dental tray by for example boiling it in water for a short period of time, such as 15 to 60 seconds. The material may be plastically deformed after reaching a temperature of 50 °C and above, such as 75 °C and above. After the dental tray 100 has been heated it is left in air to cool to a temperature at which the dental tray 100 is comfortable inserted into the mouth of a mammal, such as a person. Thereafter, the person bites on the dental tray 100 to plastically deform the dental tray 100. The plastic deformation of the dental tray 100 realizes a better fit between the teeth and gum and the dental tray 100. This results in a dental tray 100 that will get a more effective contact between the dental tray 100 and the teeth of the person, i.e. a customized dental tray 100. The combination of the end walls 104, 105 and the property of plastic deformation realizes that saliva can be kept separated from the bleaching agent in a better way, since the end walls 104, 105 make of for the deformation. If there were no end walls 104, 105, the deformation would risk to open up the through 101 even more to contact between saliva and bleaching agent, since the risk would be greater that the person customizing the dental tray would bite on and deform the longitudinal ends of the dental tray. The end walls 104, 105 in combination with the property to plastically deform the dental tray 100, allows the person customizing the dental tray 100 to ascertain that the dental tray 100 is in the right place for plastic deformation after heating, since the person can assure that the end walls 104, 105 are placed distally of the inner most molars. In this way the dental tray 100 may be dimensioned to fit snuggly with the teeth of the mammal to achieve a better fit and also improve retention. Still further, the deformable dental tray 100 allows for optimization of use of bleaching agent, since a better fit decreases voids between dental tray 100 and teeth, such that bleaching agent can be squeezed into contact with the teeth. A suitable material of the dental tray 100 for obtaining this deformability is a thermoplastic. Suitable thermoplastic materials for allowing the "boil and bite" concept described above are polyethylene-polyvinyl acetate (EVA), polyvinylchloride (PVC), polyurethane (PU), and polyesters (PE), such as polycaprolactone (PCL). These thermoplastic polymers are heated until they become soft and pliable, allowing them to be molded to the shape of the person.

At a position corresponding to the labial part of the dental arch, the dental tray 100 may provided with a grip tab 109. The grip tap 109 extends laterally from the buccal/labial side wall 107 or the base wall 108. The position corresponding to the labial part of the dental arch is substantially in the middle between the end walls 104, 105.

It should be understood that the dental tray shown in the drawings may also be understood to represent dental desensitizing trays. In such cases, the dental bleaching composition or layer is replaced with a desensitizing composition or layer

Further, the invention has mainly been described with reference to a few embodiments. However, as is readily understood by a person skilled in the art, other embodiments than the ones disclosed above are equally possible within the scope of the invention, as defined by the appended claims.

In the claims, the term "comprises/comprising" does not exclude the presence of other elements or steps. Furthermore, although individually listed, a plurality of means or elements may be present. Additionally, although individual features may be included in different claims, these may possibly advantageously be combined, and the inclusion in different claims does not imply that a combination of features is not feasible and/or advantageous. In addition, singular references do not exclude a plurality. The terms "a", "an", "first", "second" etc. do not preclude a plurality. Reference signs in the claims are provided merely as a clarifying example and shall not be construed as limiting the scope of the claims in any way.

## Claims

1. A dental tray (100) for bleaching teeth, wherein said dental tray (100) has an arched longitudinal extension for conforming with a dental arch of a mammal, wherein a trough (101) extends from a first transversal end wall (104) at a first end (102) of the longitudinal extension to a second transversal end wall (105) at a second end (103) of the longitudinal extension, said dental tray (100) being plastically deformable, such that the trough (101) may elastically enclose the teeth, **characterized in that**, an upper end of the first end wall (104) and/or the second end wall (105) is concavely arched to improve the fit with the gum distally of the innermost molars.

2. The dental tray (100) according to claim 1, wherein the trough (101) extends from the first end wall (104), within a lingual side wall (106), a buccal/labial side wall (107), and a occlusal base wall (108), to the second end wall (105).

3. The dental tray (100) according to any one of the preceding claims, wherein the dental tray (100) is a "boil and bite" dental tray.

4. The dental tray (100) according to any one of the preceding claims, wherein the dental tray (100) is plastically deformable upon heating to 50 °C and above.

5. The dental tray (100) according to any one of the preceding claims, wherein the dental tray (100) is made of polyethylene-polyvinyl acetate (EVA), polyvinylchloride (PVC), polyurethane (PU), and polyesters (PE), such as polycaprolactone (PCL).

6. The dental tray (100) according to any one of the preceding claims, comprising a grip tab (109).

7. The dental tray (100) according to claim 6, wherein the grip tap (109) extends laterally from a position corresponding to the labial part of the dental arch.

8. A non-therapeutic method of shaping a dental tray (100) according to any one of claims 1 to 7, comprising the steps of: heating the dental tray (100) to 50 °C or above; after heating the dental tray (100), the dental tray (100) is placed along the dental arch of a person; the person biting the dental tray (100) subsequent to placing the dental tray (100) along the dental arch of the person; and cooling the dental tray (100) to room temperature.

9. The method according to claim 8, wherein the heating of the dental tray (100) is performed by boiling the dental tray (100) in water.

## Patentansprüche

1. Zahnschiene (100) zum Bleichen von Zähnen, wobei die Zahnschiene (100) eine gebogene Längserstreckung zum Anpassen an einen Zahnbogen eines Säugetiers aufweist, wobei sich eine Mulde (101) von einer ersten transversalen Endwand (104) an einem ersten Ende (102) der Längserstreckung zu einer zweiten transversalen Endwand (105) an einem zweiten Ende (103) der Längserstreckung erstreckt, wobei die Zahnschiene (100) plastisch verformbar ist, so dass die Mulde (101) die Zähne elastisch umschließen kann **dadurch gekennzeichnet, dass**,
ein oberes Ende der ersten Endwand (104) und/oder der zweiten Endwand (105) konkav gebogen ist, um die Passform mit dem Zahnfleisch distal der innersten Backenzähne zu verbessern.

2. Zahnschiene (100) nach Anspruch 1, wobei sich die Mulde (101) von der ersten Endwand (104) innerhalb einer lingualen Seitenwand (106), einer bukkalen/labialen Seitenwand (107) und einer okklusalen Basiswand (108) zur zweiten Endwand (105) erstreckt.

3. Zahnschiene (100) nach einem der vorhergehenden Ansprüche, wobei die Zahnschiene (100) eine Aufbissschiene (Engl. "boil and bite" dental tray) ist.

4. Zahnschiene (100) nach einem der vorhergehenden Ansprüche, wobei die Zahnschiene (100) beim Erhitzen auf 50 °C und darüber plastisch verformbar ist.

5. Zahnschiene (100) nach einem der vorhergehenden Ansprüche, wobei die Zahnschiene (100) aus Polyethylen-Polyvinylacetat (EVA), Polyvinylchlorid (PVC), Polyurethan (PU) und Polyestern (PE), wie etwa Polycaprolacton (PCL), gebildet wird.

6. Zahnschiene (100) nach einem der vorhergehenden Ansprüche, umfassend eine Grifflasche (109).

7. Zahnschiene (100) nach Anspruch 6, wobei sich die Grifflasche (109) seitlich von einer Position erstreckt, die dem labialen Teil des Zahnbogens entspricht.

8. Nicht-therapeutisches Verfahren zum Formen einer Zahnschiene (100) nach einem der Ansprüche 1 bis 7, umfassend die folgenden Schritte: Erhitzen der Zahnschiene (100) auf 50 °C oder mehr; nach dem Erhitzen der Zahnschiene (100) wird die Zahnschiene (100) entlang des Zahnbogens einer Person platziert; die Person beißt auf die Zahnschiene (100), nachdem die Zahnschiene (100) entlang des Zahnbogens der Person platziert wurde; und Abkühlen der Zahnschiene (100) auf Raumtemperatur.

9. Verfahren nach Anspruch 8, wobei das Erhitzen der Zahnschiene (100) durch Kochen der Zahnschiene (100) in Wasser durchgeführt wird.

## Revendications

1. Gouttière (100) pour le blanchiment des dents, dans laquelle ladite gouttière (100) présente une extension longitudinale arquée pour épouser une arcade dentaire d'un mammifère, dans laquelle un creux (101) s'étend d'une première paroi d'extrémité transversale (104) au niveau d'une première extrémité (102) de l'extension longitudinale à une seconde paroi d'extrémité transversale (105) au niveau d'une seconde extrémité (103) de l'extension longitudinale, ladite gouttière (100) étant plastiquement déformable, de sorte que le creux (101) puisse envelopper élastiquement les dents, **caractérisée en ce qu'**une extrémité supérieure de la première paroi d'extrémité (104) et/ou de la seconde paroi d'extrémité (105) est arquée de manière concave pour améliorer l'ajustement avec la gencive, de manière distale par rapport aux molaires les plus en arrière.

2. Gouttière (100) selon la revendication 1, dans laquelle le creux (101) s'étend de la première paroi d'extrémité (104), à l'intérieur d'une paroi latérale linguale (106), d'une paroi latérale buccale/labiale (107) et d'une paroi de base occlusale (108), à la seconde paroi d'extrémité (105).

3. Gouttière (100) selon l'une quelconque des revendications précédentes, dans laquelle la gouttière (100) est une gouttière « thermomoulable ».

4. Gouttière (100) selon l'une quelconque des revendications précédentes, dans laquelle la gouttière (100) est déformable plastiquement lorsqu'elle est chauffée à 50 °C ou plus.

5. Gouttière (100) selon l'une quelconque des revendications précédentes, dans laquelle la gouttière (100) est en polyéthylène-acétate de polyvinyle (EVA), polychlorure de vinyle (PVC), polyuréthane (PU) et polyesters (PE), tels que la polycaprolactone (PCL).

6. Gouttière (100) selon l'une quelconque des revendications précédentes, comprenant une languette de préhension (109).

7. Gouttière (100) selon la revendication 6, dans laquelle la languette de préhension (109) s'étend latéralement depuis une position correspondant à la partie labiale de l'arcade dentaire.

8. Procédé non thérapeutique de mise en forme d'une gouttière (100) selon l'une quelconque des revendications 1 à 7, comprenant les étapes de : chauffage de la gouttière (100) à 50 °C ou plus ; après avoir chauffé la gouttière (100), la gouttière (100) est placée le long de l'arcade dentaire d'une personne ; morsure de la gouttière (100) par la personne, après avoir placé la gouttière (100) le long de son arcade dentaire ; et refroidissement de la gouttière (100) à température ambiante.

9. Procédé selon la revendication 8, dans lequel le chauffage de la gouttière (100) s'effectue par immersion de la gouttière (100) dans de l'eau en ébullition.
